# EUROPÄISCHE PATENTSCHRIFT

(11) **EP 3 541 664 B1**
(45) Veröffentlichungstag und Bekanntmachung des Hinweises auf die Patenterteilung: **04.10.2023**
(21) Anmeldenummer: 17801416.3
(22) Anmeldetag: 13.11.2017
(51) Int. Cl.: B60R 16/03

(54) **VERTEILEREINHEIT**
DISTRIBUTOR UNIT
UNITÉ DE DISTRIBUTION

(30) Priorität: 18.11.2016 DE 102016222791; 22.11.2016 DE 102016222975
(43) Veröffentlichungstag der Anmeldung: 25.09.2019
(73) Patentinhaber: Robert Bosch GmbH, 70442 Stuttgart (DE)
(72) Erfinder: MACK, Juergen, 73035 Goeppingen (DE)
(86) Internationale Anmeldenummer: PCT/EP2017/078998
(87) Internationale Veröffentlichungsnummer: WO 2018/091392

(56) Entgegenhaltungen:
- EP-A1- 3 043 442
- US-A1- 2013 043 827
- US-A1- 2015 180 254
- US-B1- 9 368 986

## Beschreibung

Die Erfindung betrifft eine Verteilereinheit zum parallelen Anschluss zumindest zweier elektrischer Verbrauer an das Bordnetz eines Kraftfahrzeugs gemäß dem Patentanspruch 1.

### Stand der Technik

In modernen Kraftfahrzeugen werden heutzutage wenigstens eine, meist mehrere Steckdosen für Zigarettenanzünder und/oder andere elektrische steckbare Geräte verbaut.

Mit der stetigen Weiterentwicklung elektronischer Geräte werden diese auch immer häufiger und in allen Lebenslagen verwendet. Mobiltelefon, Laptop und MP3-Player sind aus dem modernen Alltagsleben nicht mehr wegzudenkende Geräte. Mit der Entwicklung der mobil, also auch im eigenen Auto, verwendeten elektronischen Geräte können diese nun auch durch die fahrzeugeigene Stromversorgung über die Anschlussbuchse des Zigarettenanzünders aufgeladen werden. Hierfür stehen unter anderem 12 V-Adapter sowie Adapter mit USB-Port und 5 V zur Verfügung. Beide Adapter können nur einzeln benutzt werden und legen so die Anschlussbuchse des Zigarettenanzünders auf eine einzige Funktion fest. Das führt bei mehreren zu ladenden elektronischen Geräten zu einem Engpass.

Der Stand der Technik, wie z.B. aus der US2013/043827 A bekannt ist, kennt zur Lösung des oben beschriebenen Problems

Mehrfachadapter, die in die Buchse des Zigarettenanzünders im Auto gesteckt werden, um mehrere Ladegeräte bzw. elektrische Verbraucher einfach und flexibel mit dem Bordnetz des Fahrzeugs zu verbinden.

Jedoch ist der Zigarettenanzünder bezüglich der maximalen Anschlussleistung limitiert, so dass der Fall eintreten kann, dass die Gesamtaufnahmeleistung der angeschlossenen Ladegeräte, diejenige der Installation des Fahrzeugs bzw. des Zigarettenanzünders übersteigt. Tritt dieser Fall ein, so löst im Allgemeinen die Sicherung der Spannungsversorgung bzw. des Zigarettenanzünders aus. Hierdurch ist ein Wechsel der Sicherung notwendig und/oder eine weitere Verwendung der Spannungsversorgung über das Bordnetz kann eingeschränkt sein.

Aufgabe der vorliegenden Erfindung ist es daher, eine Möglichkeit zu offenbaren, mehrerer elektronische Verbraucher über das Bordnetz zu Laden, ohne dabei die maximale Anschlussleistung des Bordnetzes zu überschreiten. Dabei soll sich die vorgeschlagene Lösung schnell und unkompliziert auch nachträglich in ein Kraftfahrzeug einbauen lassen und dabei kostengünstig und platzsparend sein. Diese Aufgabe wird erfindungsgemäß gelöst durch eine Verteilereinheit zum parallelen Anschluss zumindest zweier elektrischer Verbrauer an das Bordnetz eines Kraftfahrzeugs mit den Merkmalen des Anspruchs 1. Vorteilhafte Ausgestaltungen, Varianten und Weiterbildungen der Erfindung sind den Unteransprüchen zu entnehmen.

### Offenbarung der Erfindung

Eine erfindungsgemäße Verteilereinheit zum parallelen Anschluss zumindest zweier elektrischer Verbrauer an das Bordnetz eines Kraftfahrzeugs umfasst eine Eingangsschnittstelle zum elektrischen Verbinden der Verteilereinheit mit einer Steckdose eines Kraftfahrzeuges, zumindest zwei Ausgangsschnittstellen zum elektrischen Verbinden der Verteilereinheit mit jeweils einem elektrischen Verbraucher, und eine Verteilerelektronik. Die Verteilerelektronik stellt eine elektronische Verbindung zwischen der Eingangsschnittstelle und den Ausgansschnittstellen her und umfasst eine Steuerung und einen elektronischen Schalter. Der Schalter ist derart über die Steuerung ansteuerbar, dass jeweils eine der Ausgangsschnittstellen von der Eingangsschnittstelle mit Strom versorgt wird, während alle übrigen Ausgangsschnittstellen nicht mit Strom versorgt werden. Auf diese Weise wird eine Verteilereinheit vorgestellt, die flexibel allen benötigten Ansteckbuchsen Platz bietet und, in der Buchse des Zigarettenanzünders eingesteckt, gleichzeitig als Verteiler zum Laden mehrerer elektronischer Verbraucher fungieren kann, wodurch das gleichzeitige Betreiben von mehreren elektrischen Verbrauchern, deren gesamte Aufnahmeleistung die Anschlussleistung der Steckdose übersteigt, sichergestellt werden kann, ohne eine Überlastung der Installation und/oder ein Auslösen der KFZ-Sicherung zu begünstigen.

Unter elektrischen Verbrauchern werden im Rahmen der Anmeldung insbesondere Ladegeräte, Mobiltelefone, Tablets, Computer, Navigationsgeräte, Freisprechanlagen und ähnliche elektrische Verbraucher verstanden.

In einer vorteilhaften Ausgestaltung ist die Steuerung dazu eingerichtet, den Schalter derart anzusteuern, dass die Ausgangsschnittstellen in einer festgelegten Schaltsequenz und jeweils für einen Zeitraum Δt mit Strom versorgt werden. Dabei ist die Steuerung bevorzugterweise derart eingerichtet, dass der Zeitraum Δt ein vordefinierter konstanter Wert ist. Auf diese Weise kann eine besonders vorteilhafte Umschaltzeit beispielsweise zwischen einer und fünf Minuten festgelegt werden, so dass auch bei kurzen Fahrzeiten und oder bei einem kurzen Abstellen des Motors (z. B. Start-Stopp) eine gleichmäßige Verteilung der Energie über sämtliche elektrische Verbraucher sichergestellt ist.

Eine weitgehend gleichmäßige Verteilung der Energie wird also durch eine annähernd gleiche mittlere Einschaltdauer der elektrischen Verbraucher realisiert. Generell ist die Verteilereinheit dabei so eingerichtet, dass sie die angeschlossenen Verbraucher nur dann mit Strom versorgt, wenn die Batteriespannung ein ausreichendes Spannungsniveau hat, oder der Generator des Kraftfahrzeugs ausreichend Energie zur Verfügung stellen kann.

Vorzugsweise umfasst die Verteilerelektronik einen Stromsensor, wobei der Stromsensor dazu eingerichtet ist, eine momentane Stromaufnahme der Verteilereinheit zu erfassen, und wobei die Steuerung dazu eingerichtet ist, den Zeitraum Δt zumindest teilweise in Abhängigkeit von der momentanen Stromaufnahme festzulegen. Auf diese Weise ergibt sich der Vorteil, dass Verbraucher, die nur einen geringen Strombedarf haben, beispielsweise Ladegeräte, die den Ladevorgang eines Stromspeichers bereits zum größten Teil abgeschlossen haben, zugunsten von Verbrauchern zurückgestellt werden, deren Strombedarf aktuell höher ist, beispielsweise Ladegeräte, die einen weitgehend leeren Stromspeicher laden.

In einer weiteren Ausführungsform ist die Steuerung dabei dazu eingerichtet, den Schalter in der Schaltsequenz weiterzuschalten, wenn die Stromaufnahme einen festgelegten Grenzwert unterschreitet, wobei der Grenzwert einen Wert kleiner als 1,5A, vorzugsweise einen Wert von 1A, besonders bevorzugterweise einen Wert von 0,5A hat.

In einer bevorzugten Ausgestaltung umfasst die Verteilerelektronik des Weiteren eine Speichereinheit, wobei die Steuerung dazu ausgelegt ist, bei jedem Schaltvorgang des elektronischen Schalters eine Information im Speicher abzuspeichern, welche der Ausgangsschnittstellen durch den betreffenden Schaltvorgang mit Strom versorgt wird.

Vorteilhafterweise ist die Steuerung dazu ausgelegt, im Falle einer Wiederaufnahme der Stromversorgung nach einer Spannungsunterbrechung an der Verteilereinheit die Information aus der Speichereinheit abzurufen, welche Ausgangsschnittstelle zuletzt mit Strom versorgt wurde. Ferner ist die Steuerung dazu ausgelegt, die Schaltsequenz bei derjenigen Ausgangsschnittstelle wieder aufzunehmen, die zuletzt mit Strom versorgt wurde.

In einer weiteren vorteilhaften Ausführungsform ist die Steuerung dazu eingerichtet, eine verstrichene Zeitdauer seit dem letzten Schaltvorgang in der Speichereinheit abzuspeichern. Ferner ist die Steuerung dazu eingerichtet, im Falle einer Wiederaufnahme der Stromversorgung nach einer Spannungsunterbrechung an der Verteilereinheit die verstrichene Zeitdauer seit dem letzten Schaltvorgang aus der Speichereinheit abzurufen und die Ausgangsschnittstelle, die zuletzt mit Strom versorgt wurden, für eine Zeitdauer mit Strom zu versorgen, die der Differenz des festgelegten Zeitraums Δt und der verstrichenen Zeitdauer entspricht. Das bedeutet, dass bei einem Neustart des Ladevorgangs des zuletzt geladenen Verbrauchers lediglich eine Restzeitspanne abläuft, bevor zum nächsten Verbraucher gewechselt wird.

Durch die Speicherung kann das nachteilige Verhalten, dass stets mit demselben Verbraucher gestartet wird, wirkungsvoll unterbunden sein. Dies wiederum unterstützt den vorstehend formulierten Vorteil der Erfindung, dass eine gleichmäßige Verteilung der zur Verfügung stehenden Energie durch eine annähernd gleiche mittlere Einschaltdauer der elektrischen Verbraucher erreicht werden kann.

Bevorzugterweise ist die Steuerung ausgebildet, die Schaltsequenz mittels eines Zufallsalgorithmus zu bestimmen, wobei der Zufallsalgorithmus wahlweise einmalig oder nach jedem Schaltvorgang aufgerufen werden kann. Es kann also entweder zu Beginn die Reihenfolge der Schaltsequenz zufällig bestimmt werden, oder nach Ablauf des vorgegebenen Zeitraum Δt stets neu und zufällig bestimmt werden.

In einer bevorzugten Ausführungsform umfasst die Verteilereinheit eine Benutzerschnittstelle. Dabei erweist es sich als Vorteil, dass die Benutzerschnittstelle derart eingerichtet und mit der Steuerung verbunden ist, dass ein Benutzer den Zeitraum Δt frei wählen und einstellen kann. Ferner ist die Benutzerschnittstelle derart eingerichtet und mit der Steuerung verbunden, dass der Benutzer den jeweils nächsten Schaltvorgang in der Schaltsequenz herbeiführen kann. Dabei ist denkbar, dass im Fahrzeuginnenraum beispielsweise ein sogenannter "Weiterschaltungs-Knopf" vorhanden ist, mittels dem der Benutzer wahlweise zum nächsten elektrischen Verbraucher weiterschalten kann. In einer weiteren Ausführungsform ist die Benutzerschnittstelle derart eingerichtet und mit der Steuerung verbunden, dass der Benutzer den festgelegten Grenzwert der Stromaufnahme einstellen kann, wodurch der Benutzer den Grenzwert an die jeweiligen Bedürfnisse der angeschlossenen elektrischen Verbraucher anpassen kann.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand von bevorzugten Ausführungsbeispielen näher erläutert, wobei für gleiche Merkmale gleiche Bezugszeichen verwendet werden. Die Zeichnungen sind schematisch und zeigen:
- Fig. 1: beispielhaft ein Schaltbild eines Bordnetzes mit angeschlossenen Verbrauchern und einer erfindungsgemäßen Verteilereinheit
- Fig. 2: beispielhaft einen Zeitverlauf der Schaltsequenz einer erfindungsgemäßen Verteilereinheit

### Beschreibung von Ausführungsformen

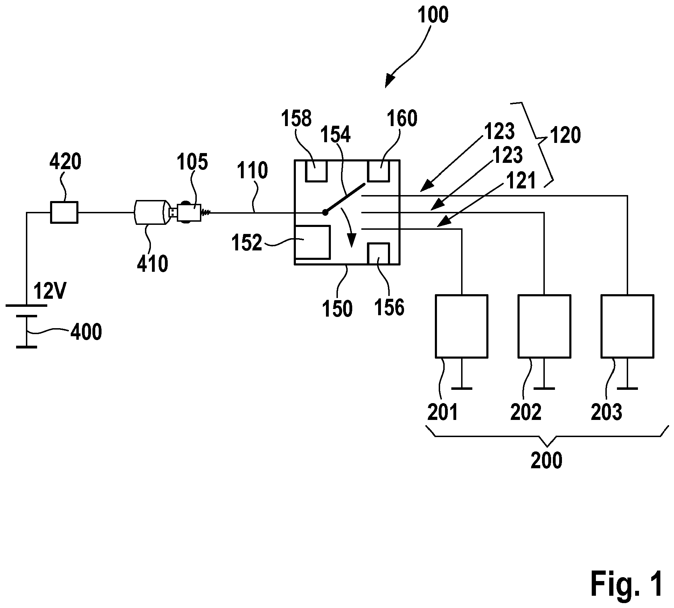

In Figur 1 ist schematisch ein Schaltbild eines Bordnetzes 400 eines Kraftfahrzeugs dargestellt. An das Bordnetz 400 sind über eine erfindungsgemäße Verteilereinheit 100 elektrische Verbraucher 200 verbunden, wobei die Verteilereinheit 100 in der dargestellten Ausführungsform über einen ein Steckerelement 105, eine Steckdose 410, beispielsweise einem Zigarettenanzünder, und eine Sicherung 420 an das Bordnetz 400 angeschlossen ist. Im dargestellten Ausführungsbeispiel schließt die Verteilereinheit 100 drei elektrische Verbraucher 201, 202, 203 mittels eines parallelen Anschlusses an das Bordnetz 400 des Kraftfahrzeugs an, wobei die Anzahl der angeschlossenen Verbraucher 200 variabel ist, so dass die vorliegende Erfindung eine Verteilereinheit 100 in Form eines Mehrfachadapters für zwei, drei, vier oder beliebig viele elektrische Verbraucher 200 darstellt. Die Verteilereinheit 100 umfasst eine Eingangsschnittstelle 110 zum elektrischen Verbinden der Verteilereinheit 100 mit der Steckdose 410 des Kraftfahrzeuges und eine beliebige Anzahl Ausgangsschnittstellen 120, wobei in der in Figur 1 dargestellten Variante drei Ausgangsschnittstellen 121, 122, 123 dargestellt sind. Über die drei Ausgangsschnittstellen 121, 122, 123 werden die drei elektrischen Verbraucher 201, 201, 203 mit der Verteilereinheit 100 verbunden.

Ferner weist die Verteilereinheit 100 eine Verteilerelektronik 150 auf, die eine elektronische Verbindung zwischen der Eingangsschnittstelle 110 und den Ausgansschnittstellen 121, 122, 123 herstellt. Des Weiteren weist die Verteilerelektronik 150 eine Steuerung 152 und einen elektronischen Schalter 154 auf, wobei der Schalter 154 derart über die Steuerung 152 ansteuerbar ist, dass jeweils eine der Ausgangsschnittstellen 121 von der Eingangsschnittstelle 110 mit Strom versorgt wird, während alle übrigen Ausgangsschnittstellen 122, 123 nicht mit Strom versorgt werden. Ferner kann die Steuerung 152 den Schalter 154 derart ansteuern, dass die Ausgangsschnittstellen 120 in einer festgelegten Schaltsequenz und jeweils für einen Zeitraum Δt mit Strom versorgt werden, wobei der Zeitraum Δt ein vordefinierter konstanter Wert sein kann oder dynamisch beeinflusst werden kann, wie weiter unten beschrieben ist.

Wie in Figur 1 dargestellt, umfasst die Verteilerelektronik 150 des Weiteren eine Speichereinheit 158. Die Steuerung 154 ist dazu ausgelegt, bei jedem Schaltvorgang des elektronischen Schalters 154 eine Information in der Speichereinheit 158 abzuspeichern. Dabei bezieht sich die Information insbesondere auf die Aussage, welche der Ausgangsschnittstellen 121, 122, 123 durch den betreffenden Schaltvorgang mit Strom versorgt wird. Grundsätzlich ist es vorteilhaft, wenn die Steuerung 152 dazu ausgelegt ist, im Falle einer Wiederaufnahme der Stromversorgung nach einer Spannungsunterbrechung an der Verteilereinheit 150 die Informationen darüber, welche Ausgangsschnittstelle 121, 122, 123 zuletzt mit Strom versorgt wurde, direkt aus der Speichereinheit 158 abzurufen und die Schaltsequenz bei auch bei derjenigen Ausgangsschnittstelle 121, 122, 123 wieder aufzunehmen.

Ferner ist die Steuerung 152 dazu eingerichtet, regelmäßig eine verstrichene Zeitdauer seit dem letzten Schaltvorgang in der Speichereinheit 158 abzuspeichern, so dass im Falle einer Wiederaufnahme der Stromversorgung nach einer Spannungsunterbrechung an der Verteilereinheit 150 auch die Information über die verstrichene Zeitdauer seit dem letzten Schaltvorgang aus der Speichereinheit 158 abgerufen werden kann. Die Ausgangsschnittstelle 121, 122, 123, die zuletzt mit Strom versorgt wurde, wird dann bei Wiederaufnahme der Stromversorgung für eine Zeitdauer mit Strom versorgt, die der Differenz des festgelegten Zeitraums Δt und der verstrichenen Zeitdauer entspricht.

Die Verteilerelektronik 150 umfasst des Weiteren einen Stromsensor 156, der dazu eingerichtet ist, eine momentane Stromaufnahme der Verteilereinheit 100 zu erfassen. Dabei ist die Steuerung 152 in einer bevorzugten Ausführungsform der Erfindung dazu eingerichtet, den Zeitraum Δt zumindest teilweise in Abhängigkeit von der momentanen Stromaufnahme festzulegen.

Die Steuerung 152 ist dazu ausgelegt, den Schalter 154 in einer Schaltsequenz weiterzuschalten, sobald die Stromaufnahme einen festgelegten Grenzwert unterschreitet. Es hat sich als vorteilhaft herausgestellt, den Grenzwert bei 1,5A, vorzugsweise bei 1A, besonders bevorzugterweise bei 0,5A anzuordnen.

Die Verteilereinheit 100 weist ferner eine Benutzerschnittstelle 160 auf, welche elektronisch mit der Steuerung 152 verbunden ist. Ein Benutzer kann über die Benutzerschnittstelle 160 zum einen den Zeitraum Δt frei wählen und einstellen und zum anderen des jeweils nächsten Schaltvorgang in der Schaltsequenz herbeiführen. Ebenfalls ist es möglich, dass der Benutzer über die Benutzerschnittstelle den festgelegten Grenzwert der Stromaufnahme einstellen kann.

Die Steuerung 152 ist ferner dazu eingerichtet, die Schaltsequenz mittels eines Zufallsalgorithmus zu bestimmen, wobei der Zufallsalgorithmus wahlweise einmalig oder nach jedem Schaltvorgang aufgerufen werden kann.

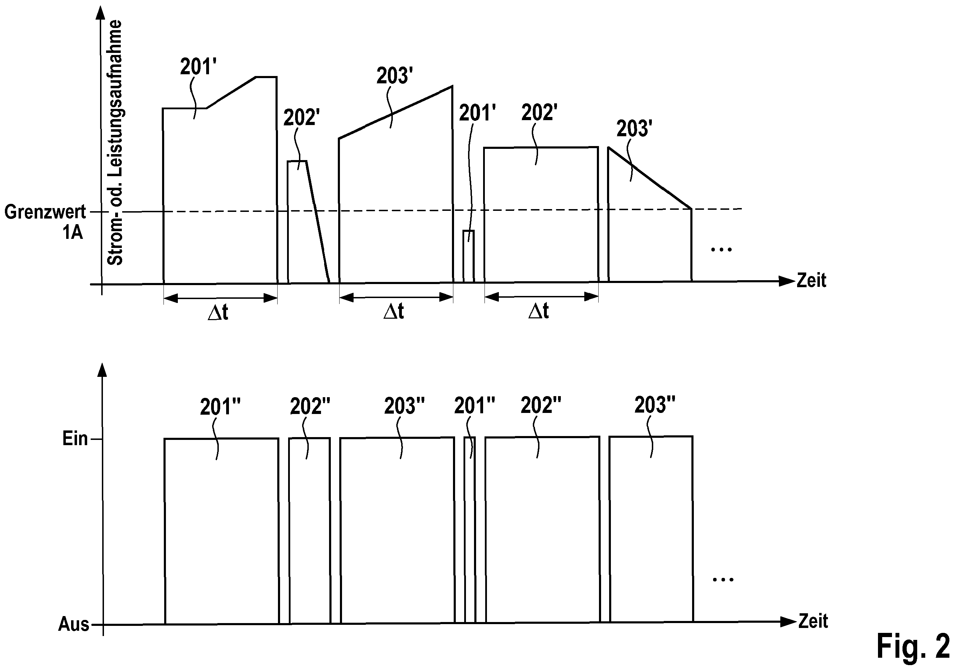

Figur 2 zeigt beispielhaft einen Zeitverlauf der Schaltsequenz einer erfindungsgemäßen Verteilereinheit 100. Die Schaltsequenz ist in diesem Fall durch die Abfolge "Ausgangsschnittstelle 121 - Ausgangsschnittstelle 122 - Ausgangsschnittstelle 123 - Ausgangsschnittstelle 121 ..." bzw. analog hierzu durch die Abfolge "Verbraucher 201 - Verbraucher 202 - Verbraucher 203 - Verbraucher 201 ..." gekennzeichnet, die sich solange wiederholt, wie eine Spannung an der Eingangsschnittstelle 110 anliegt.

In dem oberen Teil der Figur 2 ist die Stromaufnahme der einzelnen an die Ausgangsschnittstellen 120 angeschlossenen Verbraucher 200 über die Zeit dargestellt. In dem Beispiel der Figur 2 sind die aus Figur 1 bekannten drei Verbraucher 201, 202, und 203 an die Verteilereinheit 100 angeschlossen, wobei die Schaltsequenz des elektronischen Schalters 154 bewirkt, dass jeder der Verbraucher 200 für einen festgelegten Zeitraum Δt mit Strom versorgt wird. Die mit den Verbrauchern 201, 202 und 203 korrespondierenden Stromaufnahmen sind durch die Blöcke 201', 202' und 203' gekennzeichnet. Wie in der Figur angedeutet, existieren in der Schaltsequenz zwischen den Blöcken 201', 202' uns 203` Ruhe- bzw. Pausenzeiten zwischen dem Umschalten zwischen zwei der Ausgangsschnittstellen 121, 122, 123, die jedoch auf ein technisch notwendiges Minimum reduziert sind.

Der in der Figur 2, oberer Teil zuerst auf der Zeitachse aufgetragene Block 201' kennzeichnet eine Stromentnahme durch den Verbraucher 201. Dabei ist im Beispiel der Verlauf der Stromentnahme nicht konstant, sondern abschnittsweise linear. Die Dauer der Stromaufnahme entspricht in diesem Fall der festgelegten Zeitdauer Δt, was durch eine entsprechende Kennzeichnung entlang der Zeitachse deutlich gemacht wurde.

Im unteren Teil der Figur 2 ist die Stromversorgung der Ausgangsschnittstelle 201 durch einen korrespondierenden Block 201" gekennzeichnet, der für die Zeitdauer Δt den Wert "Ein" hat.

Nach Verstreichen der festgelegten Zeitdauer Δt schaltet der elektronische Schalter 154 die Stromversorgung entsprechend der vorgegebenen Schaltsequenz an den nächsten Verbraucher weiter, in diesem Fall den Verbraucher 202, was durch den Block 202' gekennzeichnet ist. Im unteren Teil der Figur 2 liest man analog zum Vorstehenden den Wert "Ein" für den Block 202" ab.

Wie im oberen Teil der Figur 2 erkennbar ist, ist die Stromentnahme des Verbrauchers 202 bilinear, und nach einer anfänglich konstanten Phase sinkt die Stromaufnahme linear ab. Dieses Verhalten tritt beispielsweise auf, wenn es sich bei dem Verbraucher 202 um ein Ladegerät handelt. Bei diesen Verbrauchern ist bei einer kleinen Strom- bzw. Leistungsaufnahme damit zu rechnen, dass der zu ladende Stromspeicher bereits einen hohen Füllgrad erreicht hat, oder sich das Ladegerät im stand-by Zustand befindet. Dieser Zustand stellt sich ein, wenn der zu ladende Stromspeicher vollständig geladen ist, oder kein zu ladender Stromspeicher vorhanden ist. In der sogenannten CV-Phase (Constant Voltage) nimmt die Aufnahmeleistung des Ladegerätes beginnend von einem maximalen Wert stetig hin zu einem minimal Wert ab.

Im Beispiel der Figur 2 sinkt nun die Stromentnahme 202' unter einen als gestrichelte Linie gekennzeichneten unteren Grenzwert ab, der beispielsweise bei 1A liegen kann. Wie bereits im Zusammenhang mit Figur 1 erwähnt, kann dies von der Steuerung 152 über einen Stromsensor 156 erkannt werden. Gemäß einer Ausführungsform der Erfindung veranlasst die Steuereinheit 152 nun, die Stromversorgung bei Unterschreiten des unteren Grenzwerts noch vor Ablauf der festgelegten Zeitdauer Δt mittels des elektronischen Schalters an den nächsten Verbraucher weiterzuschalten, in diesem Fall den Verbraucher 203, was durch den Block 203' gekennzeichnet ist.

Durch dieses Verhalten der Steuerung ist es möglich, die bis dahin fest vorgegebene Zeitdauer Δt zu verkürzen, um zu dem nächsten elektrischen Verbraucher frühzeitig weiterzuschalten und somit die Effizienz der Stromversorgung der einzelnen Verbraucher 200 zu steigern.

Nach Ablaufen der festgelegten Zeitdauer Δt schaltet der elektronische Schalter 154 in der Schaltsequenz weiter, wobei die Schaltsequenz im Fall der drei Ausgangsschnittstellen 121, 122 und 123 wieder bei 121 bzw. dem zugeordneten Verbraucher 201 beginnt. Wie in der Figur 2 erkennbar ist, liegt die Stromentnahme des Verbrauchers 201, repräsentiert durch den Block 201', bereits von Anfang an unter dem unteren Grenzwert der Stromentnahme, sodass auch hier vor Ablauf der Zeitdauer Δt zur nächsten Ausgangsschnittstelle bzw. zum nächsten Verbraucher 202 weitergeschaltet wird.

Da die Stromentnahme 202` dieses Verbrauchers innerhalb der festgelegten Zeitdauer Δt nicht unter den unteren Grenzwert absinkt, veranlasst die Steuerung 152 erst nach Ablauf der festgelegten Zeitdauer Δt eine Weiterschaltung der Stromversorgung gemäß der festgelegten Schaltsequenz, wodurch nun wieder der Verbraucher 203 mit Strom versorgt wird, gekennzeichnet durch Block 203'. Durch die drei Punkte hinter den Blöcken 203' sowie 203" ist angedeutet, dass sich die Schaltsequenz gemäß den vorstehend erläuterten Gesetzmäßigkeiten fortlaufend wiederholt, solange eine Spannung an der Eingangsschnittstelle 110 anliegt. Die Figurenbeschreibung dient lediglich dem Verständnis der Erfindung.

## Patentansprüche

1. Verteilereinheit (100) zum parallelen Anschluss zumindest zweier elektrischer Verbrauer (200) an das Bordnetz (400) eines Kraftfahrzeugs, umfassend
• eine Eingangsschnittstelle (110) zum elektrischen Verbinden der Verteilereinheit (100) mit einer Steckdose (410) eines Kraftfahrzeuges;
• zumindest zwei Ausgangsschnittstellen (121, 123) zum elektrischen Verbinden der Verteilereinheit (100) mit jeweils einem elektrischen Verbraucher (201, 203); und
• eine Verteilerelektronik (150), wobei die Verteilerelektronik (150) eine elektronische Verbindung zwischen der Eingangsschnittstelle (110) und den Ausgansschnittstellen (120) herstellt; wobei
• die Verteilerelektronik (150) eine Steuerung (152) und einen elektronischen Schalter (154) umfasst; wobei
• der Schalter (154) derart über die Steuerung (152) ansteuerbar ist, dass jeweils eine der Ausgangsschnittstellen (122) von der Eingangsschnittstelle (110) mit Strom versorgt wird, während alle übrigen Ausgangsschnittstellen (124) nicht mit Strom versorgt werden.

2. Verteilereinheit (100) nach Anspruch 1, **dadurch gekennzeichnet, dass** die Steuerung (152) dazu eingerichtet ist, den Schalter (154) derart anzusteuern, dass die Ausgangsschnittstellen (121, 123) in einer festgelegten Schaltsequenz und jeweils für einen Zeitraum Δt mit Strom versorgt werden.

3. Verteilereinheit (100) nach Anspruch 2, **dadurch gekennzeichnet, dass** die Steuerung (152) derart eingerichtet ist, dass der Zeitraum Δt ein vordefinierter konstanter Wert ist.

4. Verteilereinheit (100) nach Anspruch 2 oder 3, **dadurch gekennzeichnet, dass** die Verteilerelektronik (150) einen Stromsensor (156) umfasst, wobei der Stromsensor (156) dazu eingerichtet ist, eine momentane Stromaufnahme der Verteilereinheit (100) zu erfassen, und wobei die Steuerung (152) dazu eingerichtet ist, den Zeitraum Δt zumindest teilweise in Abhängigkeit von der momentanen Stromaufnahme festzulegen.

5. Verteilereinheit (100) nach Anspruch 4, **dadurch gekennzeichnet, dass** die Steuerung (152) dazu ausgelegt ist, den Schalter (154) in der Schaltsequenz weiterzuschalten, wenn die Stromaufnahme einen festgelegten Grenzwert unterschreitet, wobei der Grenzwert einen Wert kleiner als 1,5A, vorzugsweise einen Wert von 1A, besonders bevorzugterweise einen Wert von 0,5A hat.

6. Verteilereinheit (100) nach einem der Ansprüche 1 bis 5, **dadurch gekennzeichnet, dass** die Verteilerelektronik (150) des Weiteren eine Speichereinheit (158) umfasst; und dass die Steuerung (152) dazu ausgelegt ist, bei jedem Schaltvorgang des elektronischen Schalters (154) eine Information im Speicher abzuspeichern, welche der Ausgangsschnittstellen (121, 123) durch den betreffenden Schaltvorgang mit Strom versorgt wird.

7. Verteilereinheit (100) nach Anspruch 6, **dadurch gekennzeichnet, dass** die Steuerung (152) dazu ausgelegt ist, im Falle einer Wiederaufnahme der Stromversorgung nach einer Spannungsunterbrechung an der Verteilereinheit (150) die Information aus der Speichereinheit (158) abzurufen, welche Ausgangsschnittstelle (121, 123) zuletzt mit Strom versorgt wurde; und ferner dazu ausgelegt ist, die Schaltsequenz bei derjenigen Ausgangsschnittstelle (121, 123) wieder aufzunehmen, die zuletzt mit Strom versorgt wurde.

8. Verteilereinheit (100) nach Anspruch 7, **dadurch gekennzeichnet, dass** die Steuerung (152) dazu eingerichtet ist, regelmäßig eine verstrichene Zeitdauer seit dem letzten Schaltvorgang in der Speichereinheit (158) abzuspeichern; ferner dazu eingerichtet ist, im Falle einer Wiederaufnahme der Stromversorgung nach einer Spannungsunterbrechung an der Verteilereinheit (150) die verstrichene Zeitdauer seit dem letzten Schaltvorgang aus der Speichereinheit (158) abzurufen; und ferner dazu eingerichtet ist, im Falle einer Wiederaufnahme der Stromversorgung nach einer Spannungsunterbrechung an der Verteilereinheit (150) die Ausgangsschnittstelle (121, 123), die zuletzt mit Strom versorgt wurde, für eine Zeitdauer mit Strom zu versorgen, die der Differenz der festgelegten Zeitraums Δt und der verstrichenen Zeitdauer entspricht.

9. Verteilereinheit (100) nach einem der Ansprüche 1 bis 8, **dadurch gekennzeichnet, dass** die Steuerung (152) dazu eingerichtet ist, die Schaltsequenz mittels eines Zufallsalgorithmus zu bestimmen, wobei der Zufallsalgorithmus wahlweise einmalig oder nach jedem Schaltvorgang aufgerufen werden kann.

10. Verteilereinheit (100) nach einem der Ansprüche 1 bis 9, **dadurch gekennzeichnet, dass** die Verteilereinheit (100) eine Benutzerschnittstelle (160) umfasst.

11. Verteilereinheit (100) nach Anspruch 10, **dadurch gekennzeichnet, dass** die Benutzerschnittstelle (160) derart eingerichtet und mit der Steuerung (152) verbunden ist, dass ein Benutzer den Zeitraum Δt frei wählen und einstellen kann.

12. Verteilereinheit (100) nach Anspruch 10 oder 11, **dadurch gekennzeichnet, dass** die Benutzerschnittstelle (160) derart eingerichtet und mit der Steuerung (152) verbunden ist, dass der Benutzer den jeweils nächsten Schaltvorgang in der Schaltsequenz herbeiführen kann.

13. Verteilereinheit (100) nach einem der Ansprüche 10 bis 12, **dadurch gekennzeichnet, dass** die Benutzerschnittstelle (160) derart eingerichtet und mit der Steuerung (152) verbunden ist, dass der Benutzer den festgelegten Grenzwert der Stromaufnahme einstellen kann.

## Claims

1. Distribution unit (100) for the parallel connection of at least two electrical loads (200) to the on-board electrical system (400) of a motor vehicle, comprising
• an input interface (110) for electrically connecting the distribution unit (100) to a socket (410) of a motor vehicle;
• at least two output interfaces (121, 123) for electrically connecting the distribution unit (100) to in each case one electrical load (201, 203); and
• distribution electronics (150), wherein the distribution electronics (150) produce an electronic connection between the input interface (110) and the output interfaces (120); wherein
• the distribution electronics (150) comprise a controller (152) and an electronic switch (154); wherein
• the switch (154) is able to be actuated via the controller (152) in such a way that in each case one of the output interfaces (122) is supplied with current by the input interface (110), while all the remaining output interfaces (124) are not supplied with current.

2. Distribution unit (100) according to Claim 1, **characterized in that** the controller (152) is designed to actuate the switch (154) in such a way that the output interfaces (121, 123) are supplied with current in a specified switching sequence and in each case for a time period Δt.

3. Distribution unit (100) according to Claim 2, **characterized in that** the controller (152) is designed in such a way that the time period Δt is a predefined constant value.

4. Distribution unit (100) according to Claim 2 or 3, **characterized in that** the distribution electronics (150) comprise a current sensor (156), wherein the current sensor (156) is designed to capture an instantaneous current consumption of the distribution unit (100), and wherein the controller (152) is designed to specify the time period Δt at least partly depending on the instantaneous current consumption.

5. Distribution unit (100) according to Claim 4, **characterized in that** the controller (152) is configured to switch the switch (154) onward in the switching sequence if the current consumption falls below a specified limit value, wherein the limit value has a value of less than 1.5 A, preferably a value of 1 A, particularly preferably a value of 0.5 A.

6. Distribution unit (100) according to one of Claims 1 to 5, **characterized in that** the distribution electronics (150) furthermore comprise a memory unit (158); and **in that** the controller (152) is configured to store, for each switching operation of the electronic switch (154), information in the memory as to which of the output interfaces (121, 123) is supplied with current by way of the switching operation in question.

7. Distribution unit (100) according to Claim 6, **characterized in that** the controller (152) is configured, if the current supply is resumed following an interruption in the voltage at the distribution unit (150), to retrieve the information from the memory unit (158) as to which output interface (121, 123) was last supplied with current; and is also configured to resume the switching sequence at that output interface (121, 123) that was last supplied with current.

8. Distribution unit (100) according to Claim 7, **characterized in that** the controller (152) is designed to regularly store an elapsed time period since the last switching operation in the memory unit (158); is also designed, if the current supply is resumed following an interruption in the voltage at the distribution unit (150), to retrieve the elapsed time period since the last switching operation from the memory unit (158); and is also designed, if the current supply is resumed following an interruption in the voltage at the distribution unit (150), to supply the output interface (121, 123) that was last supplied with current with current for a time period that corresponds to the difference between the specified time period Δt and the elapsed time period.

9. Distribution unit (100) according to one of Claims 1 to 8, **characterized in that** the controller (152) is designed to determine the switching sequence by means of a random algorithm, wherein the random algorithm can be called selectively once or after each switching operation.

10. Distribution unit (100) according to one of Claims 1 to 9, **characterized in that** the distribution unit (100) comprises a user interface (160).

11. Distribution unit (100) according to Claim 10, **characterized in that** the user interface (160) is designed and connected to the controller (152) in such a way that a user can freely select and set the time period Δt.

12. Distribution unit (100) according to Claim 10 or 11, **characterized in that** the user interface (160) is designed and connected to the controller (152) in such a way that the user can bring about the respectively next switching operation in the switching sequence.

13. Distribution unit (100) according to one of Claims 10 to 12, **characterized in that** the user interface (160) is designed and connected to the controller (152) in such a way that the user can set the specified limit value of the current consumption.

## Revendications

1. Unité de distribution (100) pour la connexion parallèle d'au moins deux consommateurs électriques (200) au réseau de bord (400) d'un véhicule automobile, comprenant
• une interface d'entrée (110) pour la connexion électrique de l'unité de distribution (100) à une prise de courant (410) d'un véhicule automobile ;
• au moins deux interfaces de sortie (121, 123) pour la connexion électrique de l'unité de distribution (100) à respectivement un consommateur électrique (201, 203) ; et
• une électronique de distribution (150), l'électronique de distribution (150) établissant une connexion électrique entre l'interface d'entrée (110) et les interfaces de sortie (120) ; dans laquelle
• l'électronique de distribution (150) comprend une commande (152) et un commutateur électronique (154) ; dans laquelle
• le commutateur (154) peut être piloté par l'intermédiaire de la commande (152) de telle sorte que respectivement l'une des interfaces de sortie (122) est alimentée en courant par l'interface d'entrée (110) tandis que toutes les autres interfaces de sortie (124) ne sont pas alimentées en courant.

2. Unité de distribution (100) selon la revendication 1, **caractérisée en ce que** la commande (152) est aménagée pour piloter le commutateur (154) de telle sorte que les interfaces de sortie (121, 123) sont alimentées en courant dans une séquence de commutation fixe et sont respectivement pendant un laps de temps Δt.

3. Unité de distribution (100) selon la revendication 2, **caractérisée en ce que** la commande (152) est aménagée de telle sorte que le laps de temps Δt est une valeur constante prédéfinie.

4. Unité de distribution (100) selon la revendication 2 ou 3, **caractérisée en ce que** l'électronique de distribution (150) comprend un capteur de courant (156), le capteur de courant (156) étant aménagé pour détecter une consommation de courant instantanée de l'unité de distribution (100), et dans laquelle la commande (152) est aménagée pour fixer le laps de temps Δt au moins partiellement en fonction de la consommation de courant instantanée.

5. Unité de distribution (100) selon la revendication 4, **caractérisée en ce que** la commande (152) est conçue pour faire avancer le commutateur (154) dans la séquence de commutation lorsque la consommation de courant est inférieure à une valeur limite fixe, la valeur limite présentant une valeur inférieure à 1,5 A, de préférence une valeur de 1 A, de manière particulièrement préférée une valeur de 0,5 A.

6. Unité de distribution (100) selon l'une quelconque des revendications 1 à 5, **caractérisée en ce que** l'électronique de distribution (150) comprend en outre une unité de mémoire (158) ; et **en ce que** la commande (152) est conçue pour stocker à chaque processus de commutation du commutateur électronique (154) une information dans la mémoire indiquant laquelle des interfaces de sortie (121, 123) est alimentée en courant par le processus de commutation en question.

7. Unité de distribution (100) selon la revendication 6, **caractérisée en ce qu'**en cas de reprise de l'alimentation en courant après une coupure de tension au niveau de l'unité de distribution (150), la commande (152) est conçue pour récupérer dans l'unité de mémoire (158) l'information indiquant quelle interface de sortie (121, 123) a été alimentée en courant en dernier ; et est conçue en outre pour reprendre la séquence de commutation à l'interface de sortie (121, 123) qui a été alimentée en courant en dernier.

8. Unité de distribution (100) selon la revendication 7, **caractérisée en ce que** la commande (152) est aménagée pour stocker régulièrement dans l'unité de mémoire (158) une durée écoulée depuis le dernier processus de commutation ; en cas de reprise de l'alimentation en courant après une coupure de tension au niveau de l'unité de distribution (150), est en outre aménagée pour récupérer dans l'unité de mémoire (158) la durée écoulée depuis le dernier processus de commutation ; et en cas de reprise de l'alimentation en courant après une coupure de tension au niveau de l'unité de distribution (150), est en outre aménagée pour alimenter en courant l'interface de sortie (121, 123) qui a été alimentée en courant en dernier pendant une durée qui correspond à la différence entre le laps de temps fixe Δt et la durée écoulée.

9. Unité de distribution (100) selon l'une quelconque des revendications 1 à 8, **caractérisée en ce que** la commande (152) est aménagée pour déterminer la séquence de commutation au moyen d'un algorithme aléatoire, l'algorithme aléatoire pouvant être appelé au choix une seule fois ou après chaque processus de commutation.

10. Unité de distribution (100) selon l'une quelconque des revendications 1 à 9, **caractérisée en ce que** l'unité de distribution (100) comprend une interface utilisateur (160).

11. Unité de distribution (100) selon la revendication 10, **caractérisée en ce que** l'interface utilisateur (160) est aménagée de façon à être connectée à la commande (152) de telle sorte qu'un utilisateur peut librement choisir et régler le laps de temps Δt.

12. Unité de distribution (100) selon la revendication 10 ou 11, **caractérisée en ce que** l'interface utilisateur (160) est aménagée et connectée à la commande (152) de telle sorte que l'utilisateur peut provoquer le processus de commutation respectivement suivant dans la séquence de commutation.

13. Unité de distribution (100) selon l'une quelconque des revendications 10 à 12, **caractérisée en ce que** l'interface utilisateur (160) est aménagée et connectée à la commande (152) de telle sorte que l'utilisateur peut régler la valeur limite fixe de la consommation de courant.
